# EUROPEAN PATENT APPLICATION

(11) **EP 1 973 292 A1**
(43) Date of publication of application: **24.09.2008**
(21) Application number: 07290341.2
(22) Date of filing: 20.03.2007
(51) Int. Cl.: H04L 29/06

(54) **An agent for retrieving a profile and associated method for profile retrieval**

(71) Applicant: Alcatel Lucent, 75008 Paris (FR)
(72) Inventor: Kisel, Andrey, Maidenhead, Berkshire SL6 8DH (GB); Robinson, David, Aldbourne, Wiltshire SN8 2NP (GB); Schutte, Christiaan, 2252 BV Voorschoten (NL)
(74) Representative: Plas, Axel Ivo Michel

(57) **Abstract**

An agent (107) according to the invention retrieves user profiles used in a media delivery network for selecting or filtering media content based on the user profile. The agent (107) retrieves at least one user profile from storage and requests presence information indicative for presence of user(s) at a location whereto media content will be delivered. The agent uses the presence information for determining and/or adapting the user profile.

## Description

### Field of the Invention

The present invention generally relates to the retrieving of user profiles and more particular in retrieving user profiles for the insertion of personalized content in digital television applications and media-on-demand services.

### Background of the Invention

Before digital television was introduced, broadcasting stations rigorously decided which shows or programs were shown at what time during their daily TV schedules. The broadcasting stations could then sell time during or in between these programs for advertisements. Advertisements became an essential part in the funding of broadcasting stations, and an important part of classic television broadcasting. Such advertisements however pose various problems to the advertisers, such as the selection of the appropriate times to show the advertisement in order to reach their target group, the expenses involved in creating a TV commercial and choosing the number of times the commercial has to be broadcasted.

The introduction of digital television can solve some of the problems related to advertisements on television. The media-on-demand type of services offered by digital television operators allow a viewer to select the particular media he/she wants to view. For instance, a person can select which movie or episode of a soap he/she would like to view at a given time of the day. Generally, this requires the user to pay for the requested content, for instance using a subscription for a particular soap or an amount of movies per month, or by a pay-per-view system where a fee is charged for each media item that is requested. By linking a particular set of commercials to specific content, it becomes easier to reach a target group of customers. For instance, advertisements for toys can be linked to cartoons or animation movies.

Another possibility introduced by digital television is the use of a user profile to insert personalized content. Such a profile can be defined in various ways and can be used to store a wide range of information related to a particular user or account. A first way to define these profiles, is to keep a single profile per customer, where a customer is an account linked to a set-top box or similar device which is located at the premises of the customer and used to send and receive digital television instructions or content. Thus, such a profile can be associated with a single person or an entire family with parents and children. This means the profiles can be rather generic to describe the entire family. A second way to define profiles is by creating a profile for every person accessing the digital television network. In this case, each individual has one profile, and a family of four has four separate profiles. A third way is to combine the first two. Each customer has a general profile and several individual profiles or sub-profiles may be linked to this general profile. A forth way is to add a set of predefined profiles to the system, which relate to a general position or situation such as "father", "family", "parents", "children", etc. These profiles can be used to represent the general preferences of a particular group or type of users and could be defined by network operators based upon general usage information, market research or interviews.

A profile in this context should be considered very broadly. It can contain personal information such as a name, address and contact details of a person or customer. These basic profiles are sufficient to track the viewings of a customer and apply billing to them. However, to differentiate from other operators, a particular digital television operator can offer personalized content to his customers. Such personal content can be selected using various pieces of information which are stored in the profile, for instance topics of interest to the customer, languages understood by the customer or family position. Using such an extended profile is ideal to select personalized or customer-specific content that can be inserted in the requested content stream and which is tailored to the interests of a particular customer.

The US Patent 6,944,585 discloses dynamic personalized content resolution for a media server. A content resolver is used to receive requests and retrieve the user profile from a profile manager. The content resolver is then able to identify the requested content and the user to the stream server. The stream server in turn will instruct a video pump to transmit the requested content and eventual customized content to the requesting user.

The scheme described in US 6,944,585 is designed for a single user, and for the delivery of personalized content for that particular user. However it is possible that more persons are present, for instance family members or friends who are also known users to the media delivery network. Alternatively, it may be possible for a user to request media content but not watch the requested content, e.g. a parent starting a cartoon for the children while they tend to other chores. The disclosed system would use the profile of the person who requested the media content for the selection and inclusion of personalized content which may lead to including content that is inappropriate for the actual viewers. In addition, personalized content such as advertisements do not reach their target group, which reduces the effectiveness of personalized content as a tool for advertisement insertion. A result of this may be that advertising companies see little benefit over a classic television broadcasting system and they may decide to not advertise on digital television. Consequentially, it may remain impossible to offer a free digital television service paid for by advertisements to the general public.

It is an object of the present invention to provide a system for retrieving user profiles that can be used for selecting and inserting personalized content for the users of a media-on-demand system. It is another object of the present invention to logically separate a user from a single location for personalized services. It is another objective of the present invention to offer a broader range of personalized content to the users at a location.

### Summary of the Invention

According to the present invention, the above objectives are realized by an agent for retrieving at least one user profile in a media delivery network for use in selecting or filtering media content based on at least one user profile, the agent comprising means for retrieving at least one user profile from storage and the agent further comprises means for requesting presence information indicative for presence of at least one user at a location whereto the media content will be delivered and means for using the presence information for determining and/or adapting the user profile.

The media delivery network has two important functions: hosting media content and delivering the media content to a destination. This implies that the media delivery network has at least functionality capable of locating particular media content and organizing the transmission thereof to a destination. One example of a media delivery network is an IP television (IPTV) network. Such a network is used to deliver media items such as TV shows, TV channels, movies, audio files, games etc. on request to users. The network generally consists of storage media, either centralized or distributed, whereon all possible media are stored, a broadband communication network for streaming or delivering the media items to their destinations and various control nodes for receiving requests, directing these requests to the appropriate nodes for handling the requests, and for managing user profiles.

Like in the prior art solution, the user profiles can be used to select content for a user in addition to the requested content. This can be used to add additional, personalized, content to the requested content. Filtering can be useful to select parts of the requested content that are not suitable for the audience or that are not desired by the user. For Instance, a person may indicate in his/her profile that international news is of no interest to him or her, the system can then use this profile information to remove those items from a news bulletin.

The agent according to the invention has to be able to read profiles from their storage before the information therein can be used or passed to other nodes in the network. Therefore the agent has an interface to the profile storage or a node that is in charge of handling profiles such as a profile manager. The agent may be able to read the profiles from a hard disk, optical storage or network attached storage or it may send requests to a node handling the profiles. These requests generally contain an identification of the profile that is desired, for instance a usemame or unique identification number relating to the set-top box.

The agent according to the present invention can request presence information for a location. The presence information may contain information indicative for who is present at the time of a media request. It may contain the name or an identity of any user known in the network or it may contain a subset of all the users such as the members of a particular family or organization. The agent can use the presence information to discover an identification of the present users, which in turn can be used to retrieve the profile of the present user or users at a specific location. The agent may also be able to adapt profiles with the presence information, for instance in a case where the agent can be requested to provide profiles for people present at a particular location, where the request only specifies the location.

By including the presence information in the available profiles, or by selecting profiles based on presence at a particular location, the agent can ensure that personalized content is aimed at people who are actually present and able to watch/hear/appreciate the content. This can also avoid including content inappropriate for the audience or for a person who has only selected content for an audience but who does not attend the media consumption.

Optionally, the agent for retrieving at least one user profile according to the invention is characterized in that the means for requesting presence information comprise an interface to an external network outside the media delivery network.

A media delivery network operator can add a presence function to the media delivery network. Such presence function can then store presence information for users and deliver presence information to any node requesting the information. However, a media delivery network is geared towards storing, retrieving and delivering media content of any kind. Presence information is not media content and thus requires significant changes to the media delivery network. For instance, additional hardware/software is required to handle presence information changes and requests, additional hardware/software may be required for tracking locations e.g. using the Global Positioning System, IEEE 802.11 a/b/g capable devices, mobile phones etc. Installing such hardware can lead to a large investment both in terms of money and manpower and an increase in the complexity of the media delivery network.

By adding an interface to one or more networks outside the media delivery network which are able to provide presence information, the investments that are required for adding the use of presence information can be reduced significantly. The media delivery network can be modified by adding a connection such as a basic network connection over the internet, a Virtual Private Network (VPN) tunnel over the Internet, a dedicated line between both networks, a satellite connection or other type of communication channel to the external network. Many of these connections can be realised for a reduced cost which leads to a significant increase in services that a media delivery network operator can offer in comparison to the Investment. The external network operator may generate additional revenue from providing presence information or may benefit from the services offered by the media delivery network operator by providing one or more of these services to their clients.

Optionally, the agent according to the present invention is characterized in that the external network used by the agent for retrieving presence information is an IP Multimedia Subsystem (IMS) network.

An IP Multimedia Subsystem (IMS) network is designed to connect the mobile world with a multimedia environment. It uses third generation mobile technology to create a high bandwidth communication network that can be accessed by mobile devices. An IMS network generally also contains a presence function that can be used by other nodes in the IMS network. One example is the use of presence information in instant messaging application or push to talk over cellular networks to detect if a user is available for interaction.

Media-on-demand requires a substantial amount of bandwidth which an IMS network can provide in the mobile world. In addition, an IMS network is able to interact with any other type of network through one or more intermediate gateways. Establishing a link between an IMS network and a media delivery network can be achieved without a lot of effort or investment, for instance by creating a VPN tunnel over the Internet or adding a direct line between the media delivery network and the IMS network. The combination or linking of both creates benefits for the IMS network operator, the media delivery network operator and their customers. The IMS network operator can offer media-on-demand services to his customers and the media delivery network operator can offer presence based services to his customers. In addition, a user may be able to obtain media-on-demand services for his home and mobile device from a single operator if a cooperation exists between the two types of operators.

Alternatively, the agent for retrieving at least one user profile according to the invention is characterized in that the external network used by the agent for retrieving presence information is a mobile network.

In order for the agent to determine presence and profiles relating to presence, it has to find out which user is at a particular location. One way to discover the presence is by requesting each person to indicate its presence on the device that provides them access to the media delivery network. This may not work for various reasons, for instance, the effort to indicate their presence every time they move to a different location may be considered too high or a person may not be able to use an input device to indicate its presence.

Mobile networks generally cover an entire area such as a few streets, a house or a school whereas a wired network is often limited to a few connections per location. This means that a person can walk into the coverage area of a mobile network to be detected as present at a certain location, whereas a wired system requires additional steps such as locating the access point and establishing the physical connection. As a result, mobile networks can be exploited to automate presence detection. This makes the system more accessible for the general public and less complex to add the functionality to existing environments.

Also optionally, embodiments of the agent according to the invention may be characterized in that the mobile network used for retrieving presence information is a mobile telephone service network, a Global Positioning System (GPS) network, a Wireless computer network or a Bluetooth network.

Mobile networks such as mobile telephone service networks, GPS networks, Bluetooth networks or wireless computer networks are all capable of detecting devices in their coverage area. For instance an IEEE 802.11 a/b/g wireless computer network, an access point can be used to connect multiple computers together and to other computer networks such as a servers or equipment such as printers and scanners. Such an access point is aware of the computers that are connected to it. Thus, in a building with various access points, this information can be used to determine who is present at what location in that building. Public wireless computer networks such as hotspot based city networks can also be used to determine which person is present at a particular location.

A mobile telephone service network typically uses a large number of antennas spread around a city or country. A particular mobile phone will be in range of one or more of those antennas. Various techniques exist to locate a mobile phone using information from these antennas. For instance, one technique can be to determine the strength of the signal between a phone and the antennas in range, the phone is then generally closest to the antenna with the strongest signal. An alternative technique is to use triangulation where the distance between two antennas and the angle between the antenna and the phone can be used to locate a phone or trilateration where overlapping circles are used to locate a phone.

Bluetooth has a limited range wherein communication is possible. However, a device that is used for accessing the media content delivery network such as a set-top box may be equipped with a Bluetooth transmitter and receiver. This allows the device to establish a connection with for instance a Bluetooth enabled mobile phone of a user or a specific device created for Bluetooth presence detection attached to the keychain of the user. With the limited range of Bluetooth, this may lead to an accurate detection of users in the room where media is displayed.

A GPS module can be combined with any of the above technologies to increase the accuracy of the location detection. For instance, a mobile telephone network or wireless computer network may be inaccurate due to a large coverage area with only a few antennas or access points. However GPS is not the only system providing accurate location determination, the European Galileo system and the Russian GLONASS are currently under development and will provide the same services as GPS. Therefore GPS should not be considered as the only possible technology for location detection with satellites. It should be dear that any alternative or equivalent for GPS provides the same functionality and will thus yield similar results.

Any of these technologies or a combination thereof can be used to locate a person and generate presence information at a particular location. The choice of technology or combination depends mainly on the accuracy that is required. In large rural areas with few buildings, low accuracy can be sufficient to determine where a person is in an urban environment, a more accurate detection can be required to find the appropriate building for a particular person.

The use of these technologies assumes that the user has a detectable device on him when media content is requested and viewed. Such devices can be mobile phones which can easily be detected by a mobile telephone network, any Bluetooth enabled device such as a phone or hand-held computer which can be detected by a Bluetooth receiver, a device capable of using a IEEE 802.11 a/b/g network such as a laptop or a personal digital assistant. The user has to register their device in their profile in order for the network to recognize a particular user at a location.

Further optionally, the means for using presence information may be adapted to enable the agent according to the invention to only select the user profile for a present user.

The agent has access to all the profiles known in the network, either directly from storage or through other nodes in the network. The agent may be adapted to request presence information before the profiles are retrieved from the storage or other node. This presence information can then be used to only select profiles of users present at a particular location. This can reduce the required bandwidth to request and receive all profiles. In addition, the agent requires less time to process all the profiles before the information contained in the profiles can be used by the agent or transmitted to other nodes such as nodes capable of selecting personalized content.

Another option is that the means for using presence information may be adapted to enable the agent according to the current invention to update a user profile with the presence information.

The agent may alternatively request presence information for a particular location and update the profiles in storage with the information. This may be useful when privacy concerns limit the freedom in obtaining or delivering presence information. For instance, if law prohibits the sharing of location information, an operator who has access to the presence information may have the agent and a copy of the profiles in his network. He can then use the agent to keep the profiles up to date with location information. If a media delivery network requests presence information for a particular location, the agent can select the profiles that match the location and deliver the relevant information from the profile such as preferences for advertisements, without revealing the actual identity of the users present at that location.

Optionally, an embodiment of the agent according to the invention may be integrated into an Internet Protocol Television (IPTV) network.

IPTV networks are used to deliver media-on-demand services to the general public. Including personalized content in the media-on-demand services can create a differentiation to the other operators, Including an agent which is aware of presence into the IPTV network can allow the network to detect users who are at another users home, and personalize the experience for every IPTV user at the location. As a result, a user can have the same experience at home, at their neighbours or at friends. As a result, advertisements gain a higher chance to reach their target group when they are included in the IPTV transmissions.

Optionally, the media content may comprise personalized content for one or more users relating to the user profile.

Media-on-demand services are generally used to deliver predetermined media content to a user requesting that content. For instance, a television show or soap opera is recorded in advance, stored in the media delivery network where it can be requested by a user. However, personalizing content to meet the preferences of a particular user can add to the viewing experience of a user. Personalizing content can be done in various ways. One way is to offer content suggestions to a user, for instance place programs or movies that match the user preferences at the top of the list of available content. Another way is to add content to the requested content such as advertisements tailored to the user.

Personalized content can take several forms such as advertisements, news items, traffic information, etc. Advertisements can be audio, video or text based advertisements which are displayed during or in between requested content. They are personalized in such a way that a user receives advertisements for products they may actually be interest in, for stores in their area, for services they may find useful. This avoids frustration for the user from unwanted advertisements or uninteresting advertisements. In addition, an IPTV network operator can generate additional revenue from the advertisements which can be used to create a free media-on-demand service instead of a pay-per-view service or, the operator can offer both types of service to the general public who get to choose between advertisement-free and paid content or free content with advertisements.

The advantage of combining presence information and personalized content is that there is no transmission of content for an audience that is not present. The system can avoid to transmit advertisements or news items which are of interest to a user who is not or no longer at the location once the media content delivery started.

Optionally, the agent for retrieving at least one user profile according to the present invention may be adapted to retrieve personalized content from a network external to the media delivery network.

Storing personalized content in the media delivery network can provide fast lookup and retrieval of personalized content. However using an external network can lead to a much larger source of personalized content. For instance the Internet has a vast amount of information sources and consulting those may lead to a lot of additional personalized content when compared to an internal source. In addition, external sources can be under direct control of companies providing advertisements or news for the users. This could lead to a more efficient management of possible personalized content as everyone is able to add or change content on their own. In other words, a company can create a new advertisement and publish it in the external network. The media delivery network can find the new advertisement and show it to the users with a matching profile. This is more convenient than a centralized storage in the media delivery network, as every company would supply each media delivery network with their new advertisement before it can be included into to possible personalized content.

The agent for retrieving at least one user profile according to the present invention optionally can be integrated into a media content resolver capable of retrieving media content upon a request received from a user.

The media content resolver is a device capable of receiving requests from users for particular content. The resolver can then locate the requested content in the storage of the media delivery network and organize the delivery of the media content to the requesting user. The user profiles can be used by the media content resolver to determine which additional content should be selected or inserted into the requested content. It can therefore be advantageous to include the agent for determining the presence Information into the media content resolver. This way, the functionality of the content resolver is extended without increasing the complexity of the network or the need of additional hardware.

The agent for retrieving at least one user profile according to the present invention optionally can be integrated in an offer resolver capable of providing service offers upon a request received from a user.

The offer resolver is able to select offers for a user based on their profile. For instance, if a user is interested in a particular type of movies such as comedy or action, the offer resolver may suggest a special package which the user can subscribe to which includes mainly those types of movies. The offer resolver may suggest a different type of subscription to the user such as a subscription with high definition content. By enabling the offer resolver to access the presence information for users, it can detect if the person who pays for the bills or manages the subscription is present and if the time is appropriate to make any offers.

The agent for retrieving at least one user profile according to the present invention optionally can be integrated in a profile managing agent capable of managing user profiles in a media delivery network.

The profile managing agent stores profiles, handles changes to profiles made by users and supplies the profiles or a selection of information in the profiles to nodes in the network that require the profile information such as an offer resolver or a content resolver. Because the profile manager is closely related to user profiles, it may be the most optimal location for the agent. The agent can combine presence information with the profiles in the profile manager and adapt requests in accordance with the presence. It can ensure that a profile manager only delivers profiles for present users or that it is aware of the presence for each profile.

According to the present invention, the objectives are also realized by a method for retrieving at least one user profile in a media delivery network for use in selecting or filtering media content based on that profile comprising the step of retrieving t least one user profile from storage and further comprising the steps of requesting presence information indicative for presence of at least one user at the location whereto the media content will be delivered and using presence information for determining or adapting at least one user profile.

The method describes how an agent can retrieve a user profile with reference to presence information. First, a user profile is located and requested from the storage, either on the agent itself or on a different device in the network. The agent will then acquire the presence information from the storage and attempt to locate the person. Generally the agent will query one or more presence services in the media delivery network or an external network to obtain presence information. The information can indicate if a user is at a particular location, e.g. if a user is at home or not, or the information can indicate which users are at a particular location. Either of these can be used by the agent to retrieve profiles from the storage for present users or for updating profiles with the presence information that was obtained.

### Brief Description of the Drawings

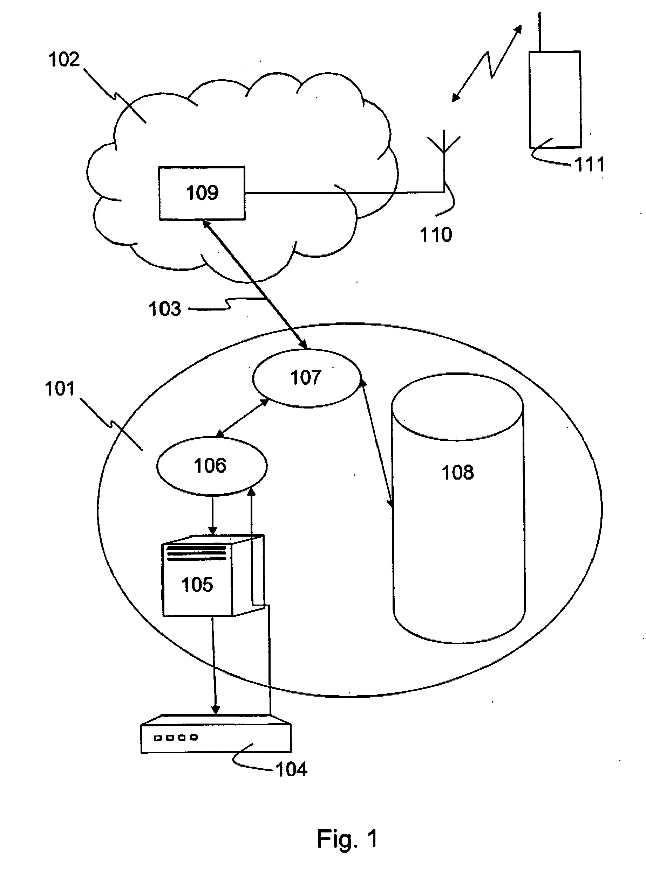

Fig. 1 illustrates an overview of the functional blocks in an IPTV network 101 containing an agent 107 for retrieving profiles according to the present invention, with connectivity to a presence function 109 in an external network 102.

### Detailed Description of Embodiment(s)

Fig. 1 illustrates a preferred embodiment of the present invention wherein the media delivery network is an IPTV network 101 and the presence information is obtained from a mobile service network 102, external to the IPTV network 101. A connection 103 links these networks together which allows the IPTV network 101 to transmit requests to the mobile service network 102 and which allows the mobile service network 102 to supply the requested information to the IPTV network 101. The connection 103 is generally a network connection whereon protocols such as IEEE 802.3 or Ethernet are used and can be based on any of the existing hardware for computer networks such as copper wires (e.g. unshielded twisted pair) or optical fibres using electric or optical signals respectively.

Each user of the IPTV network 101 requires a device that provides access to the IPTV network 101. Home equipment 108 is a set-top box (STB) connected to the IPTV network through a high bandwidth access network such as an xDSL (any Digital Subscriber Line) network or cable network. The home equipment 108 is further connected to a display such as a television set or video projector. Home equipment 108 can be a piece of hardware or software that is used on a personal computer connected to a broadband access network where the computer monitor acts as a display. Alternatively, the home equipment 108 can be a mobile phone 111 with access to third generation mobile networks capable of displaying audio and video items. The mobile telephone network may provide high bandwidth access using general packet radio service (GPRS) or universal mobile telecommunication system (UMTS).

The IPTV network 101 consists of several functions which work together to offer media-on-demand services. These services allow the user to make a request for a media item such as a cartoon, movie, television show or soap opera using his/her home equipment 108. The request is sent to the content resolver 106 which is located in the IPTV network 101 and which processes the request. Alternatively, the request is sent to a different node, for instance media server 105, and then passed to the content resolver 106. The content resolver 106 performs various tasks to process a request. A first task is to locate the requested content in the IPTV network 101, which may involve communication with the media storage in the IPTV network 101 or in the illustrated embodiment it means determining which media server 105 hosts the requested content. A second task is to find profiles for one or more users relating to the request. A third task of the content resolver 106 is to locate personalized content that matches the profile of the user who requested content or of users who are present at a location where content was requested. The personalized content may be hosted in the IPTV network 101, for instance in the content resolver 106, media server 105 or a separate storage device. Alternatively, the personalized content may be hosted in a network outside the IPTV network 101 such as the Internet or a privately operated network. In the case of an external network, content resolver 106 may have a connection to the external network for requesting content according to a particular profile and receiving responses with content selected on the basis of the profile and/or tailored to the profile.

The profiles for users are stored on a profile storage 108. The storage 108 contains a form of non volatile memory whereon all information of a particular user is stored. The embodiment illustrated in Fig. 1 shows the storage as a separate node in the IPTV network 101, however, the storage may be integrated in the profile manager 107 or in any other node with storage capacity. Generally, the profile manager 107 will be able to access the storage 108 for retrieving and altering profile information and any node that needs profile information can request such information from the profile manager 107. A user may be able to change its profile details using home equipment 104 which can then send the new information to the IPTV network 101 where the content resolver 106 can receive the changes and pass them to the profile manager 107. The profile manager 107 can then change the stored profile accordingly. Profile manager 107 is able to request presence information, in this embodiment from an external network 102 where a presence function 109 is located. Profile manager 107 has an interface to the presence function 109 for sending presence information requests and receiving presence information. The interface can be a direct connection between the profile manager 107 and the presence function 109 or may run through various intermediate systems such as firewalls, gateways or functional nodes such as a content resolver. The presence function 109 is further able to access presence information for users. For instance, presence function 109 can be connected to an antenna 110, which receives signals from mobile devices such as mobile telephone 111. The antenna can determine the signal strength and duration of time between the transmission of a signal and the receiving of that signal. If several antennas are used, this information can be combined to locate a particular user or mobile telephone 111. Such information can be mapped onto a geographical map to determine the position of a person, for instance using coordinates. These coordinates can then be matched to for instance the coordinates of a users home address to determine if a user is at home. Alternatively, the presence function 109 can retrieve information about which persons are at a particular location by determining which antennas are near the location and which distance to each antenna is required to be at the requested location. If the external network 102 is not a mobile telephone network but a wireless computer network according to IEEE 802.11 a/b/g then a similar technique can be used to locate a person. An access point is able to determine which users are connected to it and how strong the signal is. It is also possible to create a similar system using Bluetooth senders and receivers or by including GPS, Galileo or Glonass information. The presence information from presence function 109 can be used by the profile manager 107 to select the profiles from storage 108 for users present at a particular location. A more complex method would be to monitor the presence of all known users and update their profiles in the storage 108 whenever they move.

Although the profile manager 107 is shown as a separate node, it can be integrated in other nodes such as the content resolver 106, media server 105 or other optional nodes such as an offer resolver which can generate offers for additional services, either from the media delivery network operator or a related party such as a mobile telephone operator. The profile storage 108 can be integrated into the profile manager 107, in the content resolver 106, media server 105 or other optional nodes or remain as a stand alone node in the IPTV network 101.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order.

## Claims

1. An agent (107) for retrieving at least one user profile in a media delivery network (101) for use in selecting or filtering media content based on said at least one user profile, said agent comprising means for retrieving said at least one user profile from storage,
**characterized in that** said agent further comprises:
- means for requesting presence information indicative for presence of at least one user at a location whereto said media content will be delivered; and
- means for using said presence information for determining and/or adapting said at least one user profile.

2. An agent (107) for retrieving at least one user profile according to claim 1,
**characterized in that** said means for requesting presence information comprise an interface to an external network (102) outside said media delivery network (101).

3. An agent (107) for retrieving at least one user profile according to claim 2,
**characterized in that** said external network (102) is an IP Multimedia Subsystem (IMS) network.

4. An agent (107) for retrieving at least one user profile according to claim 2,
**characterized in that** said external network (102) is a mobile network.

5. An agent (107) for retrieving at least one user profile according to claim 4,
**characterized in that** said mobile network is one or more out of:
- a mobile telephone service network;
- a Global Positioning System (GPS) network:
- a Wireless computer network;
- a Bluetooth network.

6. An agent (107) for retrieving at least one user profile according to claim 1,
**characterized in that** said means for using said presence information are adapted to enable said agent (107) to only select said at least one user profile for a present user.

7. An agent (107) for retrieving at least one user profile according to claim 1,
**characterized In that** said means for using said presence information are adapted to enable said agent (107) to update said at least one user profile with said presence information.

8. An agent (107) for retrieving at least one user profile according to claim 1,
**characterized in that** said agent (107) is integrated into an internet Protocol Television (IPTV) network.

9. An agent (107) for retrieving at least one user profile according to claim 1,
**characterized in that** said media content comprises personalized content for one or more users relating to said at least one user profile.

10. An agent (107) for retrieving at least one user profile according to claim 9,
**characterized in that** said agent (107) is adapted to retrieve said personalized content from a network (102) external to said media delivery network (101).

11. An agent (107) for retrieving at least one user profile according to claim 1,
**characterized in that** said agent (107) is integrated into a media content resolver (106) capable of retrieving media content upon a request received from a user.

12. An agent (107) for retrieving at least one user profile according to claim 1,
**characterized in that** said agent (107) is integrated in an offer resolver capable of providing service offers upon a request received from a user.

13. An agent (107) for retrieving at least one user profile according to claim 1,
**characterized in that** said agent (107) is integrated in a profile managing agent capable of managing user profiles in said media delivery network (101).

14. A method for retrieving at least one user profile in a media delivery network (101) for use in selecting or filtering media content based on said at least one profile comprising the step of retrieving said at least one user profile from storage (108),
**characterized in that** said method further comprises the steps of:
- requesting presence information indicative for presence of at least one user at the location whereto said media content will be delivered; and
- using said presence information for determining or adapting said at least one user profile.
